# EUROPEAN PATENT SPECIFICATION

(11) **EP 0 717 405 B1**
(45) Date of publication and mention of the grant of the patent: **14.11.2001**
(21) Application number: 95119742.5
(22) Date of filing: 14.12.1995
(51) Int. Cl.: G11B 17/22

(54) **Automatic disk change apparatus and disk tray for the apparatus.**
Automatisches Plattenwechselgerät und Plattenträger für das Gerät
Appareil automatique de changement de disque et support de disque pour cet appareil

(30) Priority: 14.12.1994 JP 31039494; 10.03.1995 JP 5125795; 27.06.1995 JP 16042095; 29.06.1995 JP 16345295
(43) Date of publication of application: 19.06.1996
(73) Proprietor: MATSUSHITA ELECTRIC INDUSTRIAL CO., LTD., Kadoma-shi, Osaka 571-0050 (JP)
(72) Inventor: Fujita, Makoto, Ikoma-shi, Nara 630-02 (JP); Fukushima, Yasuhisa, Hirakata-shi, Osaka 573 (JP); Naoki, Goro, Higashiosaka-shi, Osaka 578 (JP); Umeda, Yoshio, Kobe-shi, Hyogo 654-01 (JP); Ezawa, Kozo, Katano-shi, Osaka 576 (JP)
(74) Representative: Grünecker, Kinkeldey, Stockmair & Schwanhäusser Anwaltssozietät

(56) References cited:
- EP-A- 0 265 167
- EP-A- 0 285 866
- EP-A- 0 541 208
- EP-A- 0 579 285
- WO-A-88/09033
- WO-A-93/08569
- DE-A- 4 205 912
- FR-A- 2 575 857
- PATENT ABSTRACTS OF JAPAN vol. 013, no. 590 (P-984), 26 December 1989 & JP 01 251367 A (TOSHIBA CORP), 6 October 1989,
- PATENT ABSTRACTS OF JAPAN vol. 016, no. 281 (P-1375), 23 June 1992 & JP 04 074348 A (FUJITSU LTD), 9 March 1992,

## Description

The invention refers to an automatic disk changer as set forth in the preamble of claim 1. A disk changer of this type is known from EP-A-0 541 208.

The afore mentioned document discloses a disk player for the reproduction of disks of a plurality of different diameters. The disk player is equipped with a disk diameter detecting arrangement, detecting the diameter of a disk loaded on a tray. To this aim, the tray is provided with a cut-out enabling the passage of light within the detector arrangement.

This invention relates to an automatic disk change apparatus for plural reproducing-only or recording/reproducing possible optical disks such as CD-ROMs, magneto-optical disks, phase change optical disks, etc, and a disk tray for the apparatus. In addition to these, this relates also to an automatic disk change apparatus of plural reproducing-only or recording/reproducing possible high-density double-faced optical disks such as digital optical disks (DVD).

The applications of optical disk are now rapidly expanding, since the disks are now available not only as the external memory of computer but as the image processing medium utilizing its extremely high memory capacity and processing speed, and its recording/reproducing capability became possible recently. Even an automatic disk change apparatus (hereinafter, autochanger in short) holding high volume optical disks making the management and operation of high volume data possible is now commercially available.

Two types of autochanger are now available as known very well, i.e., a cartridge type holding plural cartridges in a cartridge storage, each of which includes an optical disk, and a tray type holding plural detachable trays in a so-called magazine, each of which places an optical disk thereon.

The former is used mostly for the autochanger dedicated for the recording/reproducing possible optical disks such as the magneto-optical disk and the phase change optical disk, and the later is for the autochanger dedicated for reproducing-only optical disks such as CD-ROM.

In the cartridge type autochanger such as shown in JP-A-3-45319 dealing optical disks, one of cartridges is pulled out by an instrument called picker, and the cartridge is placed on a data processing drive wherein the processing such as the recording or reproducing of data are executed. In a case where the disk is a double face type disk on both surfaces of which recording/reproducing is possible, the cartridge can be reversed by reversing the picker so that a recording/reproducing process can be performed on the double surfaces.

Moreover, a cartridge provided with a write-protect tug confirming the recording possibility of internally held recording/reproducing possible optical disk is shown in the JP-A- 2-92887. By providing said write protect tug and by using a drive adapted for this, possibility of erratic data erasing can be prevented beforehand.

However, with the autochanger of such, the occupied device volume per disk is inevitably large so that a problem such as a excessively large volume of high-capacity autochanger is possible. Moreover, since the drive is operational only to the recording/reproducing possible optical disks such as the magneto-optical disk and the phase change optical disk, the reproducing-only optical disk such as CD-ROM can not be stored and processed together with the disk of other type so that the autochanger of this type would not be able to meet with various applications possible in the coming multimedia age.

On the other hand, with the tray-type autochanger dealing optical disks is shown in JP-A-3-212847 for example. A number of trays placing an optical disk individually are held within the autochanger of this type. One of the trays is fetched by the picker and is placed on the drive and processed. Since the occupied volume per disk of autochanger of this type is much less than that of before-mentioned autochanger, this would be advantageous in respect of the device volume reduction.

However, since the drive is operational only with the reproducing-only optical disks such as CD-ROMs excluding the recording/reproducing possible optical disks such as magneto-optical disks and phase change optical disks, a problem such as the impossibility of recording and storage of high capacity data including the video images is inevitable. Moreover, since only the reproducing-only disks can be held in the tray adapted for this device and these disks can not be discriminated from the recording/reproducing possible optical disks, this could be another problem.

Furthermore, since the optical disk having double surfaces such as the digital optical disk (DVD) coming in near future, requires a disk reversing means, the automatic processing can not be performed within the changer so that a manual disk reversing process after taking out the disk from the device has to be carried out.

### SUMMARY OF THE INVENTION

One of the objects of this invention is to offer a compact autochanger capable of mixed operations of reproducing-only optical disks and recording/reproducing possible optical disks.

The invented autochanger comprises the features of claim 1. Preferred embodiments of the invention are subject matter of the dependent claims.

By using the autochanger of this invention, the reproducing-only optical disks can be mixed with the recording/reproducing possible optical disks in operation, so that it is adaptable not only to any data storages and memories but to various applications utilizing multi-media data including video and speech stored in CD-ROM, etc.. Since an improved storage efficiency is obtained by employing a new tray system, a compact and high capacity auto-changer can be realized.

The effects and advantages of the present invention are now described below by referring the below-shown preferred embodiments and drawings.

### BRIEF EXPLANATION OF THE DRAWINGS

Figure 1 shows a structure of automatic disk changer, that is, an autochanger which is a first embodiment of the invention.

Figure 2 is a planar view of the recording/reproducing device mounted within said autochanger shown in Fig. 1.

Figure 3 shows a planar view of the tray used in said autochanger shown in Fig. 1.

Figure 4 shows a planar view of another tray used in the autochanger shown in Fig. 1.

Figures 5(A) and 5(B) show partial enlargements of the tray shown in Fig. 4.

Figure 6 shows a perspective view of the magazine holding trays inside.

Figures 7(A) and 7(B) are to explain the operations of a means to confirm the recording possibility provided on a tray which is in a condition shown in Fig. 6.

Figure 8(A) is a perspective view of magazine holding the trays shown in Fig. 4.

Figure 8(B) is to explain the operation of said means confirming recording possibility provided on a tray which is in a condition shown in Fig. 8(A).

Figure 9 shows a structure of autochanger.

Figure 10 shows a structure of autochanger.

Figure 11 shows a planar view of recording/reproducing device disposed in an autochanger shown in Fig. 10.

Figure 12 shows a planar view of the tray used in an autochanger shown in Fig. 10.

Figures 13(A), 13(B), 13(C), 13(D), and 13(E) are to explain the operations of the autochanger shown in Fig. 10.

Figure 14 shows a construction of autochanger.

Figures 15(A), 15(B), and 15(C) are to explain the operations of autochanger shown in Fig. 14.

Figure 16 shows a construction of autochanger.

Figure 17 shows a construction of autochanger.

Figure 18(A) shows a planar view of the tray holding a recording/reproducing possible disk in the autochanger shown in Fig. 17.

Figure 18(B) shows a planar view of the tray holding a reproducing-only disk used in the autochanger shown in Fig. 17.

Figure 19 shows an operation of the autochanger shown in Fig. 17 at detecting the disk-insertion and the disk type.

Figure 20 shows an example of output signal pattern of the sensor at detecting the disk insertion and the disk type in a case shown in Fig. 19.

Figure 21 shows a construction of autochanger.

Figure 22 shows a construction of autochanger.

Figure 23 shows a planar view of the tray used in the automatic disk changer shown in Fig. 22.

### DESCRIPTION OF THE PREFERRED EMBODIMENTS

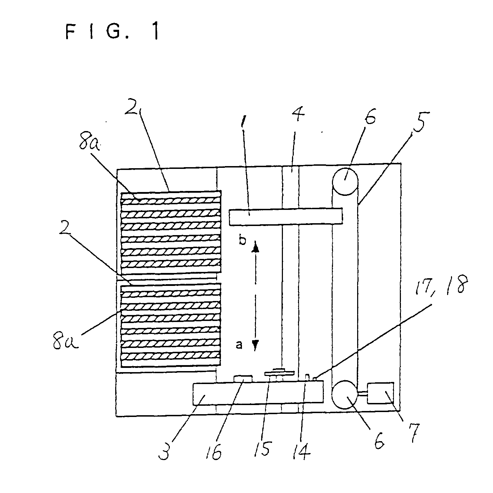

In Fig. 1, tray carrier 1 is guided on guide shaft 4, and is driven by belt 5 through pulley 6 driven by driving motor 7. The tray carrier 1 takes out a tray 8a holding a disk (not shown) in tray storage 2, transports tray 8a in a direction of arrow-(a) and places it on drive 3 driving a recording-only disk and a recording/reproducing possible disk.

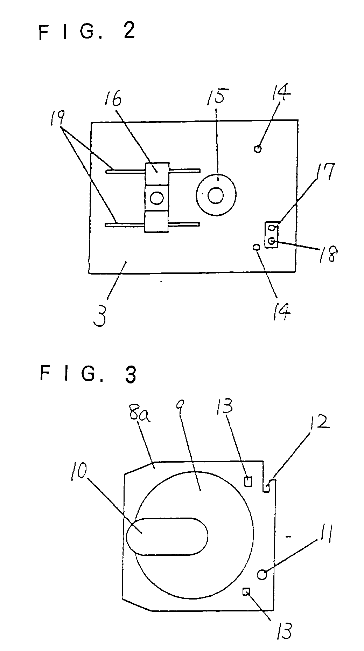

As shown in Fig. 3, since a depression is provided on tray 8a, a disk can be placed in there. Moreover, opening 10 allowing the insertion of pickup 16 of drive 3 and turntable 15, and a positioning hole 13 determining the tray position to drive 3 are provided on tray 8a. Moreover, sensor hole 11 identifying the reproducing-only disk provided at a position corresponding to a switch 17 acting as a detector and notch 12 enabling the disk pulling-out/insertion operations easy are provided on drive 3.

In drive 3 shown in Fig. 2, turntable 15 rotating the disk placed on drive 3, pickup 16 guided by guide 19 and moved in the radial direction of disk by means of a linear motor for example, and reading the signal from the disk, is provided.

Moreover, positioning pin 14 corresponding to the positioning hole 13 of tray 8a, switch 17 determining the type of disk whether it is a reproducing-only or recording/reproducing possible disk, and switch 18 acting as a detector determining the possibility of recording/erasing in handing a recording/reproducing possible disk, are provided also.

Then, the operations of this apparatus are explained below. Tray carrier 1 is moved by belt 5 driven by motor 7 in either the direction shown by arrow (a) or (b), and carried at a position corresponding to a specific tray 8a, and tray 8a on which disk (not shown) placed in the depression provided on tray 8a is fetched by utilizing notch 12 from tray storage 2.

Then, tray carrier 1 holding tray 8a is moved in a direction of arrow (a) and positioning hole 13 of tray 8a is engaged with positioning pin 14 of drive 3, setting tray 8a on drive 3.

At this time, turntable 15 and pickup 16 of drive 3 are inserted into opening 10, and at the same time, the disk placed on tray 8a is clamped on turntable 15 by using a clamp (not shown) provided on tray carrier 1. Synchronized with this motion, when sensor hole 11 provided on tray 8a is detected by switch 17, the disk placed on drive 3 is confirmed as a reproducing-only disk such as CD-ROM.

Then, the controllers and the demodulation circuit including the disk rotation control circuit (e.g., CLV controller) for reproduction controlling the gain of controller and the phase compensation circuit are switched according to the inserted disk. After this, pickup 33 starts the operation of signal reproducing. Moreover, the position of tray 8a on drive 3 is determined at this condition, and is held within tray carrier 1 at a height avoiding the chances of contact with the disk.

The returning operation of tray 8a ending the reproducing operation is then conducted in a following order. As soon as the stop of turntable 15, tray carrier 1 is moved to a direction of arrow (b) by driving motor 7. After the clamp of disk onto turntable 15 is disengaged, tray carrier 1 carries tray 8a holding a disk in depression 10 to a predetermined position within tray storage 2. After this, tray 8a is returned into tray storage 2 by using notch 12.

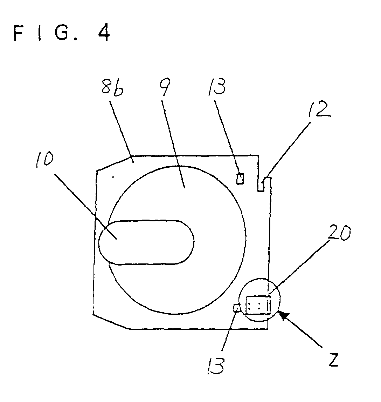

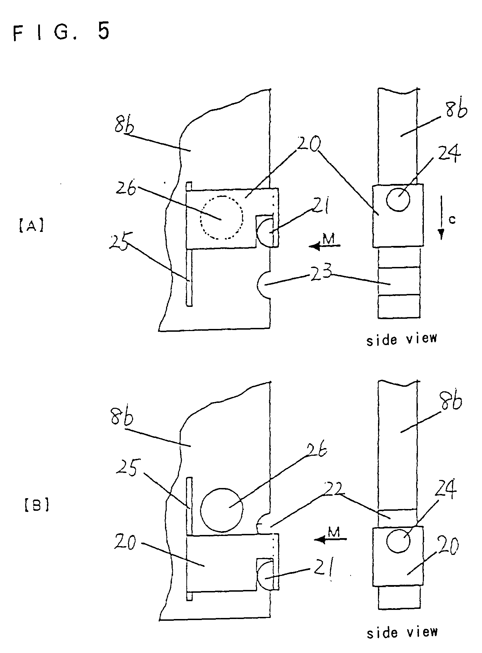

Fig. 4 shows a tray designed for recording/reproducing possible disk, and Fig. 5 shows an enlarged partial view of the same. A detailed structure of the tray for recording/reproducing possible disk is now described below referring Figs. 4 and 5.

Moreover, since the tray for reproducing-only disk and the same components are identified by same numbers, and the individual explanations for those are omitted here.

Sensor hole 26 is disposed on tray 8b at a position facing to switch 18 for detecting the recording/erasing operation on drive 3, and slider 20 is disposed to cover sensor hole 26, and this slider 20 is guided in guide groove 25 freely. In a normal condition, sensor hole 26 is kept covered when locking nail 21 provided together with slider 20 is engaged with depression 22 provided on tray 8b, holding the recording/reproducing possible disk placed on tray 8b at a recording/erasing possible condition. When a user wishes to bring the recording/reproducing possible disk at a recording/erasing impossible condition, the operations described below are carried out.

By using operation hole 24 provided on slider 20, slider 20 is moved against the holding force of locking nail 21 on depression 22 up to the position where locking nail 21 is engaged with depression 23. Since sensor hole 26 is exposed on the surface, it becomes detectable by switch 18 provided on drive 3, and thus, it can be recognized that the recording/erasing of the disk is in an impossible condition. As a matter of course, the relationship between the sensor hole 26 and the switch 18 for detection can be reversed. Thus, needless to say that the relationship is so constructed that the recording/erasing is possible only when sensor hole 26 is exposed.

Since the operations of autochanger using tray 8a designed for recording/reproducing possible disk are fundamentally identical with that the case employing before-mentioned tray 8a designed for reproducing only disk, only the differences are now explained below.

At a condition where sensor hole 26 of tray 8b is covered by slider 20, when tray 8b is placed on drive 3, tray 8b is judged to be in a recording/erasing possible condition by switch 18, and thus, a normal recording/reproducing or erasing operation is conducted.

On the other hand, a condition where sensor hole 26 of tray 8b is exposed on the surface is judged to be that tray 8b is in a recording/erasing impossible condition. And thus, for example, tray 8b is returned into the original position in tray storage 2 after an error message is sent to the host computer from the autochanger.

As above-explained, by employing a tray system, the space-efficiency of autochanger can be improved substantially, and moreover, by providing a disk-type discriminating means on the tray, a mixed operation of reproducing-only disks and recording/reproducing possible disks within the autochanger becomes possible. Therefore, the autochanger of such can be offered, and the applications of such can be expanded considerably.

The explanations so far have been made providing that structural difference between the tray designed for reproducing-only disk and the tray designed for recording/reproducing possible disk is very little. However, the number of tray types can be reduced into one type by disposing two sensor holes side-by-side and by changing the structure of sensor hole 11 provided on tray 8a designed for reproducing-only disk into the one of which setting can be varied by employing a slider having a structure like the one of sensor hole 26 provided on tray 8b designed for recording/reproducing possible disk.

In this case, different from the above-given explanation, a different combination of detection polarities of slider and sensor hole is recommended. For example, the recording/reproducing possible condition may well be recognized by the closed conditions of sensor holes 11 and 26, recording/erasing impossible condition by the opened sensor hole 11 and the closed sensor hole 26, and the reproducing-only disk can be recognized by the opened condition of both sensors 11 and 26. This condition can be realized by storing two empty trays in tray storage 2 initially and by changing the setting into the one like above-shown later according to the necessity.

Since notch 12 of tray is provided to hold down the tray during the transportation, the shape is not necessarily be limited to the one shown here, but symmetrically with notch 12, the same notch may be provided on the other end of tray. Moreover, in a case where either the recording/reproducing possible disks or the reproducing-only disks are inserted in a casing such as a cartridge of determined shape, said cartridge can be used in the invented autochanger without applying any alternations thereto by copying the shapes and positions of notch and detection holes on the current cartridge.

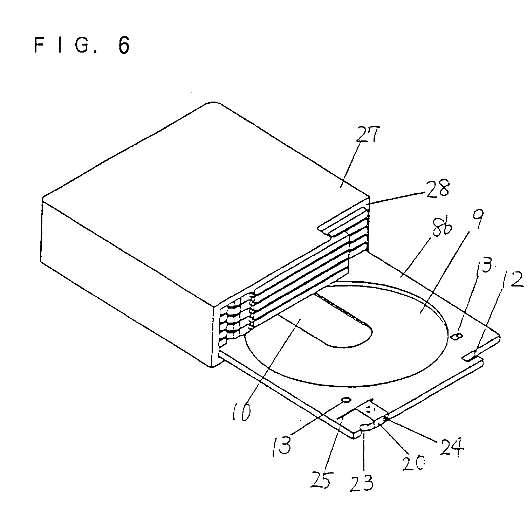

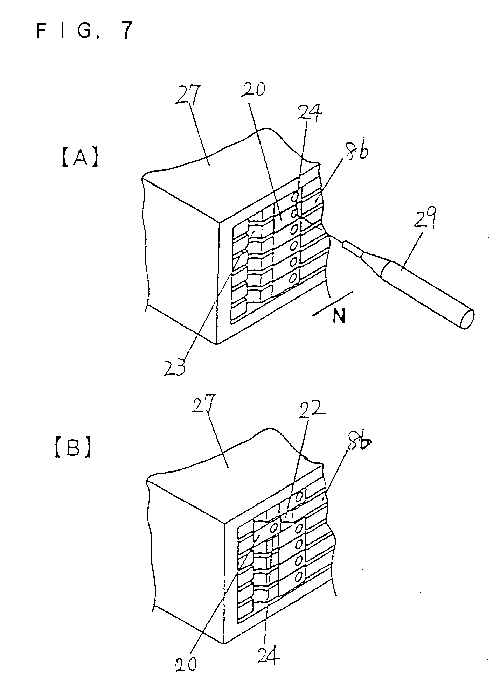

Fig. 6 shows a so-called magazine to which the tray storage holding trays 8b is made detachable, and Figs. 7(A) and 7(B) shows an partial enlargement thereof.

Fig. 6 shows a case where magazine 27 is holding six trays 8b to which sliders 20 are disposed in a row on its front. At a condition where trays are stored completely, a lock mechanism (not shown) preventing user from easy pull-out of tray 8b is operating. Cut 28 is provided on magazine 27 in order to make the pulling out of the tray from the magazine by using the tray carrier of autochanger easy, and by this, the notch 12 is exposed from the shell of magazine 27. Fig. 7(A) shows a partial enlargement of slider 20 which is in a condition where trays 8b are completely held within magazine 27. The operations of slider 20 is now explained by referring the attached drawing.

If an user wishes to set the second disk from the top held in the tray in a recording/erase impossible condition, slider 20 of the second tray from the top is moved in a direction shown by arrow (N) up to a position explained in the previous section by utilizing mechanical pencil 29 having a very sharp point and operation hole 24. The condition completing this movement is shown in Fig. 7(B).

By taking this construction, the condition of recording/ erasing of the disk can be individually and easily determined at a desired condition of these trays held in the magazine.

### (Embodiment-3)

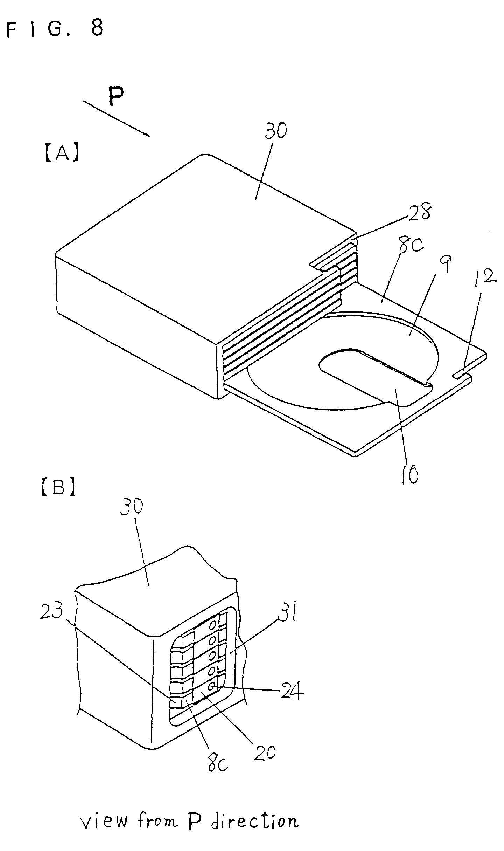

Figs. 8(A) and 8(B) shows a structure of another magazine, and this is now explained by referring Figs. 8(A) and 8(B).

Tray 8c for the recording/reproducing possible disk shown in Fig. 8(A) is held in magazine 30 exposing opening 10 to the open side of magazine 30. Sensor hole 26 and slider 20 are disposed on the back of the diagonal line opposite to the case of tray 8b, and this is to make the changer operable even if the drive mounted in the autochanger is inserted in an reversed direction. Tray 8c is characterized by the easiness to confirm the possibility of recording/erasing of disk.

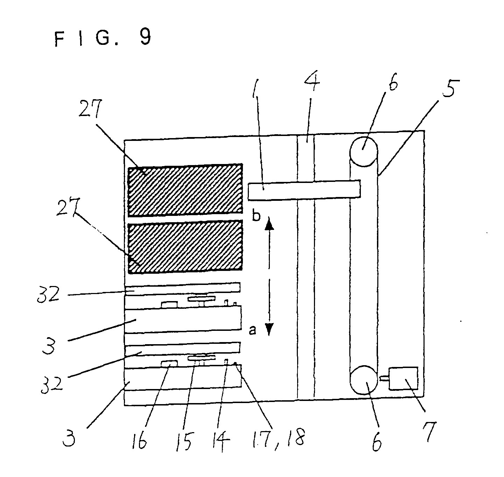

Since operating window 31 shown in Fig. 8(B) is provided on the rear of magazine 30, all of the sliders 20 placed on trays 8c can be operated through window 31. This means that the user is able to set the possibility of recording/erasing of disk from the side of magazine without detaching the magazine inserted in the autochanger, and these setting operations are identical with the ones explained in Figs. 6 and 7. Fig. 9 shows an embodiment of autochanger employing a magazine explained before by using Fig. 6.

Cut 28 making the afore-mentioned tray pulling out/insertion operations made by tray carrier 1 easier is provided in the tray held in magazine 27. Loading mechanism 32 holding the tray, loading and clamping the disk on turntable 15 is provided on drive 3. Two drives 3 are employed in the autochanger.

The operation of this embodiment is now explained in next. Similar to the case of the first embodiment explained by referring Fig. 1, tray carrier 1 taking out and holding the tray is moved in a direction shown by arrow (a), and inserts the tray into specified loading mechanism 32 of drive 3. Loading mechanism 32 clamps the disk on turntable 15 and, at the same time, the recording/erasing possibility of the disk is confirmed by switch 18. When this is affirmed, recording/reproducing or erasing operation is carried out, and when this is denied, a denial operation, for example, returning the tray into the original magazine 27 is carried out, and at the same time, an error message is sent to the host computer.

With an autochanger of this type, selective insertion of the disk into a specified magazine is possible. Although the construction of autochanger employing the magazines shown in Fig. 6 is explained in Fig. 9, in a case where the autochanger is constructed employing the magazines shown in Fig. 8(A), the drive has to be mounted in a direction opposite to the direction of the drive shown in Fig. 9, and the tray loading mechanism has to be constructed accordingly.

As above explained so far, since an arbitrarily settable recording/erasing possibility confirming means is provided on the trays for recording/reproducing possible disks, no complicated operations such as the software-wise management of recording/ erasing possibility confirmation are required.

Furthermore, when a number of trays of this type are held in the magazine, the work confirming the possibility of recording/erasing of disk can be carried out from an external side of the magazine without detachinbg the tray, and this should be one of the advantageous characteristics.

In addition to the above, similar to the autochanger of fig. 1, the autochanger of fig 9 has an advantage of high space efficiently brought by the tray system, and the mixed use of reproducing-only disks and the recording/reproducing possible disks is possible in this case.

Although the explanations so-far have been made on the bases of that the confirmations of the disk type and the possibility of recording/erasing are made within the drive, it is also possible performing the confirmations before the tray is placed on the drive by providing a detection mechanism on tray carrier 1 or tray storage 2 shown in Fig. 1.

In this case, the confirmation of such can be performed before the disks are installed on two drives one of which is used as a reproduction-only drive and the other is used as a recording/reproducing possible drive, this is highly effective to prevent the erratic disk insertion.

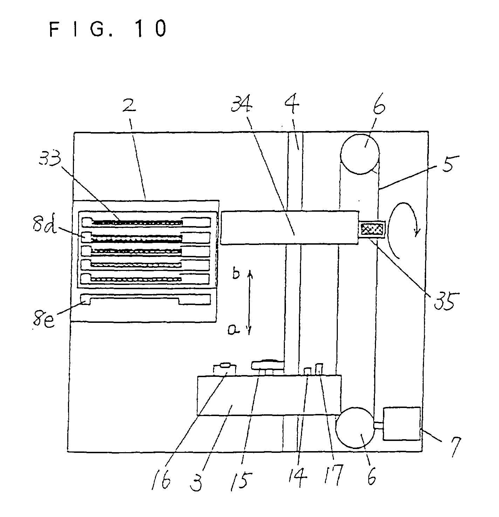

Fig. 10 shows an autochanger in which a tray 8d holding disk 33 is taken out by tray carrier 34, and is moved in a direction of arrow (a), and is placed on drive 3.

Tray carrier 34 is made to hold two trays 8d simultaneously, and is so constructed that each of these trays 8d can make a 180 degree rotation by means of reversing motor 35. Then, tray 8d is guided along guide shaft 4, and is driven by driving motor 7 through pulley 6 and belt 5.

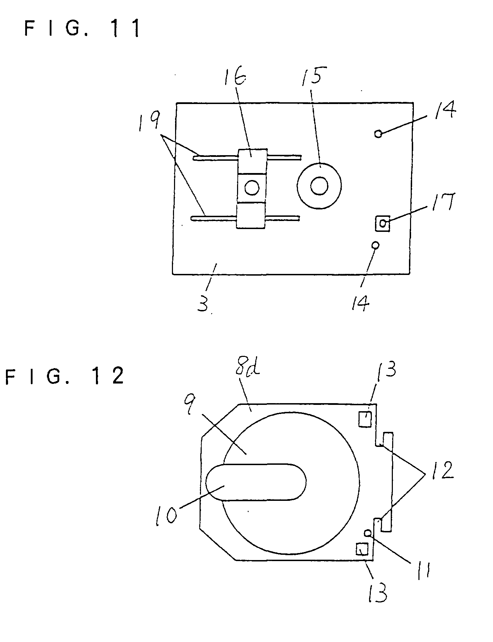

Plural trays 8d holding disks individually thereon are held in tray storage 2 in advance, and at the same time, an empty tray 8e held in an upside-down condition of tray 8d is held in a space below tray storage 2. Depression 9 holding the disk and, at the same time, opening 10 allowing the insertions of pickup 16 of drive 3 and turntable 15 shown in Fig. 11 is provided on tray 8d shown in Fig. 12. Moreover, positioning hole 13 determining the relative position to drive 3, sensor hole 11 identifying the reproducing-only disk placed on a position corresponding to switch 17 mounted on drive 3, and notch 12 allowing the taking-out/insertion from/to tray storage 2 are further provided.

In addition to these, turntable 15 guided by a linear motor or such, in a radial direction of disk, and pickup 16 guided by pickup guide 19 reading out signals from the disk are provided in drive 3 mounted in the autochanger shown in Fig. 11. Positioning pin 14 is further provided at a position corresponding to positioning hole 13 of tray 8d and switch 17. The type of the disk placed on drive 3 is determined by switch 17 if it is a reproducing only disk or a recording/reproducing possible disk.

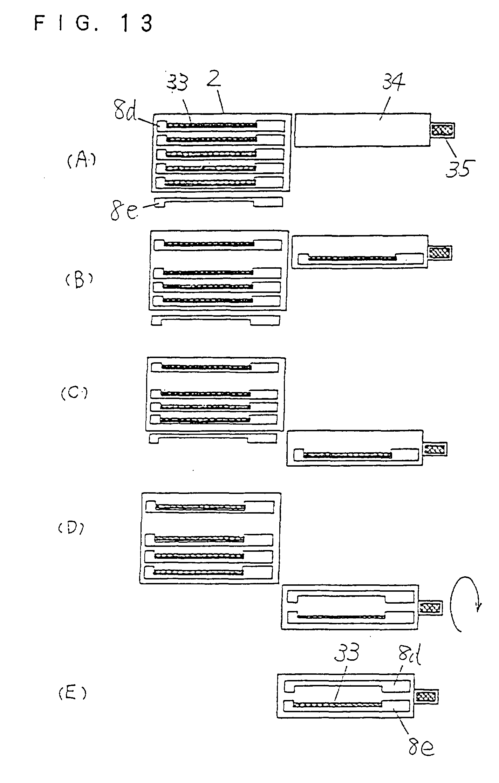

The operation of this autochanger is now explained below by referring Figs. 10, 11, 12, and 13(A) to 13(E).

Tray carrier 34 is driven by belt 5 which is further driven by driving motor 7 in either direction of arrow (a) or (b), and is moved to a position of specified tray 8d. After this, tray 8d holding disk 33 on depression 33 thereof is taken out of tray storage 2 by utilizing notch 12.

In performing the recording/reproducing on either surface or double surfaces of the taken out disk, tray carrier 34 holding trays 8d is moved to a direction of arrow (a), positioning hole 13 of tray 8d is engaged with positioning pin 14 of drive 3, and the position of tray 8d in relative to drive 3 is determined.

At this time, turntable 15 of drive 3 and pickup 16 are inserted into opening 10, and at the same time, centering of disk 33 placed on tray 8d on turntable 15 is made, and the disk is clamped on turntable 15 by a clamp (not shown) disposed on tray carrier 34.

Synchronized with these operations, the type of disk placed on drive 3 is determined if it is a reproducing-only type like CD-ROM or a recording/reproducing possible type. Then, after performing the switching of rotation control circuit (such as CLV) matched to the disk, the readout of signal are performed by using pickup 16. Moreover, tray 8d at this condition is positioned on drive 3, and is held within tray carrier 34 at a elevated height avoiding the contact with the disk.

The returning operation of tray 8d completing the reproduction is conducted in a manner shown in next. As soon as the rotation of turntable 15 is stopped, tray carrier 34 is moved to a direction of arrow (b) by driving motor 7, and the clamp of disk onto turntable 15 is released. Then, tray 8d holding disk 33 on depression 9 is transferred to a predetermined position of tray storage 2, and is returned into tray storage 2 by means of notch 12.

Then, the operation conducted when disk 33 held in tray carrier 34 is a double surface disk, and the surfaces of recording/reproducing are placed on an opposite side to the side of placing (operation by which the recording/reproducing is performed on the rear surface) is now explained.

Tray carrier 34 taken out tray 8d holding disk 33 is moved in a direction of arrow (a) by belt 5, and is stopped at a position corresponding to empty tray 8e. This position is determined by a photocoupler and a mirror not shown here. At this condition, tray carrier 34 moves empty tray 8e into a position right above the previously pulled-in tray 8d holding disk 33. Tray carrier 34 is then rotated 180 degrees by the operation of reversing motor 35, and disk 33 is then transferred and placed on the position of empty tray 8e. This means that the disk 33 is reversed and placed on empty tray 8e, and the recording/reproducing of the reversed surface of disk 33 becomes possible after completing the migration of tray carrier 34 to drive 3.

The storage of disk 33 is conducted as follows. During the before-mentioned disk returning operation, a 180 degree reversing operation of tray carrier 34 is performed, and disk 33 is stored into a predetermined position in tray storage 2 after disk 33 is transferred and placed on tray 8d. By these operations, storage of disk 33 at a condition same as the initial condition of that is completed. A series of operations of this is then completed by storing empty tray 8e into a predetermined position in tray storage 2 there-after.

By employing this autochanger structure storing an empty tray in tray storage, the number of the drives can be increased in accordance to the necessity. Thus, an extra effect enabling the recording/reproducing of reversed surface on each drive is realized by holding plural empty trays in accordance to the number of drives.

As above-described, by providing a tray carrier reversing function, an autochanger having a space-efficiency higher than the tray system and able to perform the recording/reproducing of data on double surface disk becomes available.

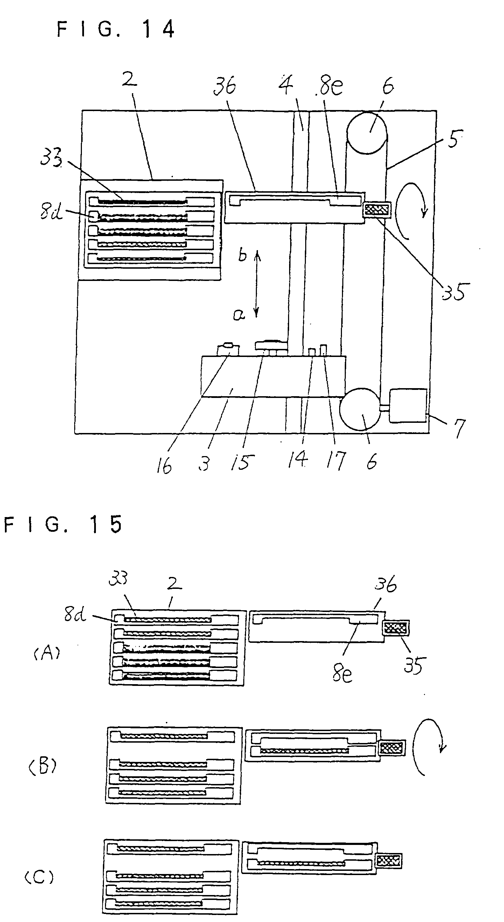

Fig. 14, and Figs. 15(A) - 15(C) are drawings to explain a construction where empty tray 8e is held in tray carrier in advance is employed.

By employing this construction requiring no returning operation of empty tray 8e explained in a previous case at the recording/reproducing of reversed surface of disk 33, an effect producing a shorter disk change time can be obtained. Thus, this means that only an operation pulling out empty tray 8e from tray storage 2 is excluded from the total operations, and the other operations remain same as the ones shown in Embodiment-5.

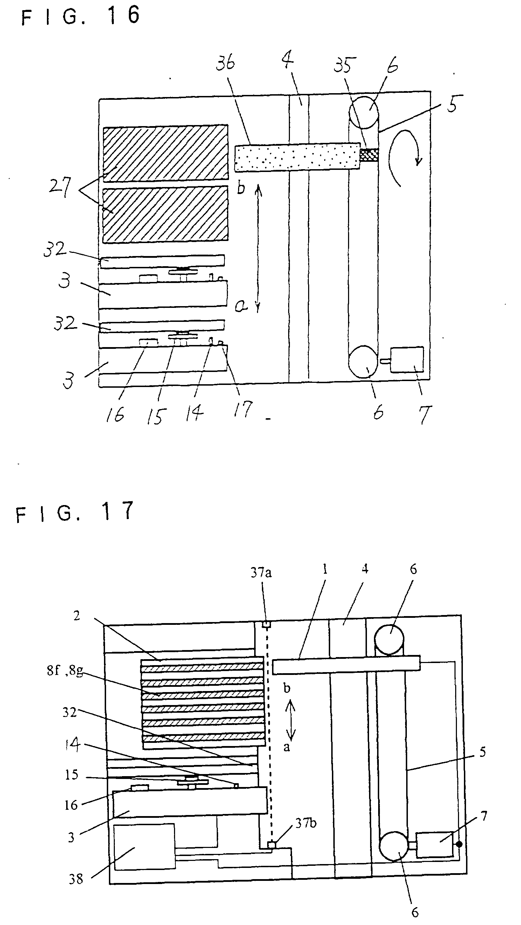

Fig. 16 shows a typical autochanger equipped with a tray storage to which magazines 27 is detachably mounted. In Fig. 16, each magazine 27 holds plural trays by which disks are individually held, and a tray carrier 36 holds an empty tray in advance, as explained in Embodiment-6. A drive 3 holds a tray and a loading mechanism 32 placing a disk on turntable 15 and clamping. Two drives 3 are provided in this autochanger, and the operation thereof is explained in next.

Similar to the case of figs. 14, 15, when the recording/reproducing is to be performed on the surface of the disk placed on the drive, tray carrier 36 by which the desired tray is taken out and inserted is left as it is, and when it is to be performed on the rear surface of the disk, transfer of the disk into the empty tray is performed by the operation of reversing motor 35.

After moved to a direction of (a), the tray is inserted into loading mechanism 32 of drive 3, and then, disk is clamped on turntable 15 by means of loading mechanism 32 before the operation of recording/reproducing is started. In returning the disk, the disk is taken out by tray carrier 36 from drive 3, and is moved in a direction of arrow (b), and is placed back into a predetermined position of magazine 27. When the rear surface of the disk is used, the disk is inserted into the original tray by the operation of reversing motor 35, and the tray is returned into the predetermined location of magazine.

The autochanger of this system is able to insert a desired disk selectively into one of the drives according to the number of drives. Although the structure of autochanger employing a tray carrier shown in Fig. 14 is explained in Fig. 16, a construction storing an empty tray into the tray storage explained in Fig. 10 (a construction providing a space storing plural number of drives under magazine 27) can be employed in this case.

In Fig. 17, tray carrier 1 pulls out tray 8f or 8g holding a disk (not shown) stored in magazine 2, moves along a direction shown by arrow (a) up to the positions of loading mechanism 32 and drive 3.

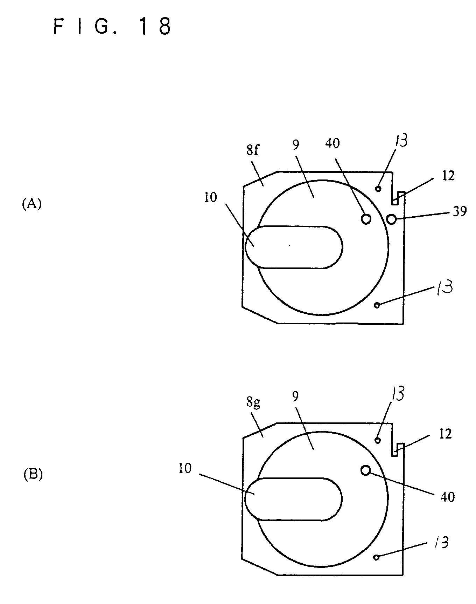

Tray carrier 1 is guided by guide shaft 4 and is driven by belt 5 and driving motor 7 through pulley 5. As shown in Figs. 18(A) and 18(B), depression 9 holding the disk is provided on tray 8f and 8g, and at the same time, opening 10 allowing the insertions of pickup 16 of drive 3 and turntable 15, positioning hole 13 determining the position to drive 3, and notch 12 allowing the tray pull-out/insertion from/into magazine 2 to tray carrier 1 are provided.

Moreover, turntable 15 rotating the disk placed thereon, pickup 16 reading the signals recorded on the disk, and positioning pin 14 determining the relative positions to tray 8f and 8g, are provided on drive 3 mounted in the auto-changer. Sensors 37a and 37b are provided on the positions corresponding to the positions of disk-type discriminating hole 39 and disk presence detecting hole 40 provided on trays 8f and 8g.

Tray 8f shown in Fig. 18(A) is a tray designed for the recording/reproducing possible disk, and tray 8g shown in Fig. 18(B) is a tray designed for the reproducing-only disk, and in a case of tray 8g, the disk-type discriminating hole 39 is blocked. Moreover, controller 38 controling the operation of autochanger and managing the information of disks according to the commands from the host computer (not shown) and the operation buttons is provided.

Then, the operations of these are explained in next. When an instruction commanding the placing a specified disk on the drive is externally inputted to controller 38, tray carrier 1 is driven by driving motor 7 through belt 5, and is moved along a direction shown by arrows (a) or (b) based on the output signal of controller 38, bringing these at positions corresponding to the specified trays 8f and 8g, and then, tray carrier 1 pulls out trays 8f and 8g by using notch 12 from magazine 2.

The tray carrier 1 holding trays 8f and 8g is then moved along a direction of arrow (a), inserting the trays into loading mechanism 32. Loading mechanism 32 makes the positioning holes of trays 8f and 8g be engaged with positioning pin 14 of drive 3, accomplishing the positioning of trays 8f and 8g to drive 3.

At this stage of operations, controller 38 sends out an instruction signal to drive 3 to insert turntable 15 and pickup 16 of drive 3 into opening 10, and at the same time, and to perform the centering of the disk placed on trays 8f and 8g on turntable 15, and then, the disk is clamped on turntable 15 by means of a clamp (not shown) provided on loading mechanism 32. After this, turntable 15 is rotated and the signal is readout by using pickup 16. Moreover, trays 8f and 8g are, at this condition, clamped and held at a height avoiding a contact with the disk by means of loading mechanism 32.

The returning operation of trays 8f and 8g after the respective reproductions are performed in a way described below. Likewise, as soon as the operation of turntable 15 is stopped by the instruction of controller 38, the clamp of disk on turntable 15 is disengaged, and tray carrier 1 pulls out trays 8f and 8g and the disks from loading mechanism 16. Then, the disks are inserted back into trays 8f and 8g which are transported back to predetermined positions in magazine 2, and are returned into magazine 2 by using notches 12.

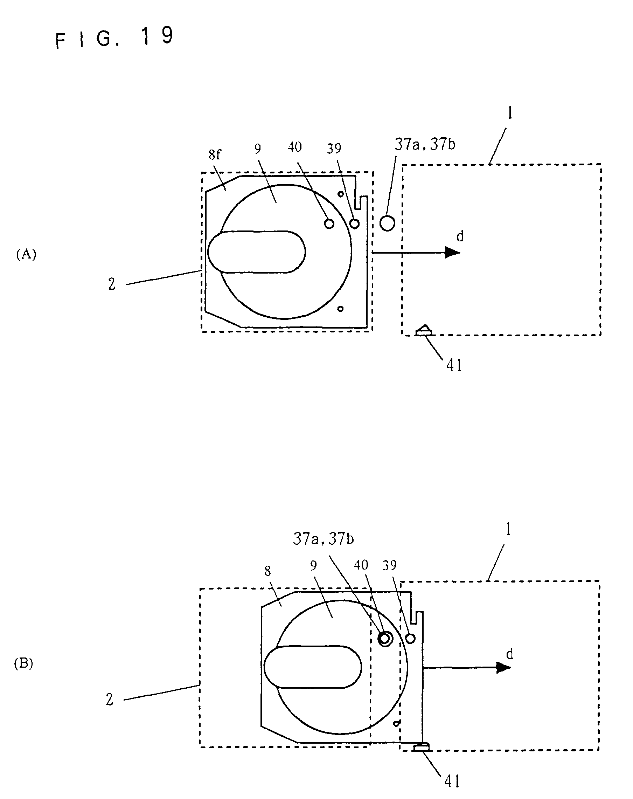

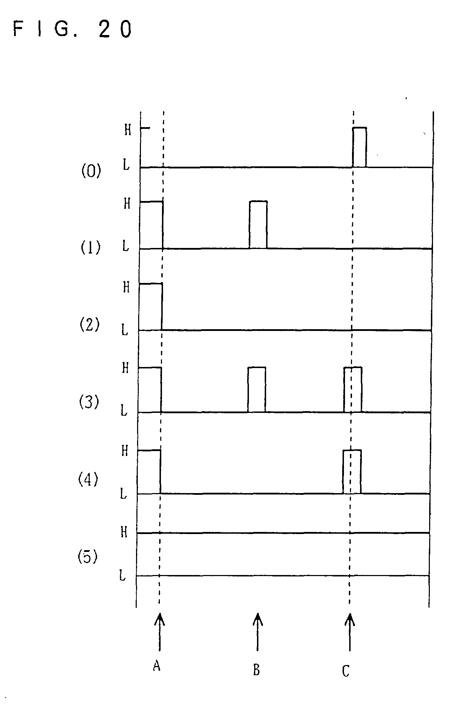

Then, the management work of these disks (such as the storage condition of disks and the types of disks) at the auto-changer is now explained below by referring Figs. 19 and 20. The explanation shown in Fig. 19 is described by referring tray 8f designed for the recording/reproducing possible disks.

A series of operations conducted at the starting of power supply and the tray exchange including the storage of various information such as the presence and the type of disk and others in controller 38 are called initialization. Although there is a chance of disk or tray spilled out of the tray or magazine, the above-explained normal disk changing operation would become impossible if it takes place. Therefore, the spilling of disk or tray from normal positions are monitored constantly by sensors 37a and 37b, and the output signals thereof are monitored constantly by controller 38.

For example, if a drive such as shown in fig 1 is used, the presence and types of disks can be identified by using controller 38 by which all of the trays are sequentially transferred to the drive by using tray carrier 1 for the initialization. However, the total time required for the transfer of all the disks and the total time to place all the disks sequentially on the drive would be very long. Since this would be very phenomenal when a large number of disks are stored and the execution of the other operations would become impossible, so that the operation efficiency of total system would be dropped down sharply.

This effect would be very significant at a condition where the system is operational under a connection to a network. Moreover, since an extra disk information sensor beside the sensor monitoring the spilling of disk or tray has to be provided on the drive, a hike of the component costs and assembling costs is inevitable.

The above-described operation called initialization in this embodiment is conducted according to the below-shown procedures. At first, controller 38 sends an instruction to tray carrier 1 commanding a sequential pull-outs of all the trays 8f from magazine 2 in a direction shown by arrow (d) shown in Fig. 19.

At this time, each of sensors 37a and 37b consisting of a light emitter and a light sensor respectively, are disposed in mutually opposing positions respectively corresponding to the disk-type confirming hole 39 and disk presence confirming hole 40 disposed respectively on tray 8f, so that the situations of these sensor-holes provided on tray 8f can be confirmed.

Moreover, an intermediate switch 41 operated when the disk presence confirming hole 40 passes through sensor 37b provided on tray 8f is disposed on tray carrier 1. Although a mechanical switch acting as an intermediate switch has been explained so far, any of the magnetic or optical switches can be used as well.

Fig. 19(A) shows a condition where tray 8f is held within the magazine, while Fig. 19(B) shows a condition where tray 8f is pulled out causing an operation of intermediate switch 41. Fig. 20 shows changes of the outputs of intermediate switch 41 and sensor 37b when tray 8f is being pulled out.

In Fig. 20, (0) shows the output signal of intermediate switch 41, (1) - (5) show the changes of output signal of sensor 37b, each of these shows a combination of sensor outputs showing various conditions produced by the combinations of the type of disk, presence of disk, pre-sence of tray, etc.

The operation of the intermediate switch is shown by H while the none-operations of the same by L, and similarly, the light detection of sensor 37b is by H while the none-detection is by L, and the other conditions are expressed likewise also. When a pull-ing out of the tray is instructed to tray carrier 1 by controller 38, the outputs of intermediate switch 41 and sensor 37b are monitored simultaneously.

Point-(A) in Fig. 20 corresponds to the condition shown in Fig. 19(A), point-(C) corresponds to the condition shown in Fig. 19(B), and point-(B) corresponds to the period during which disk presence confirming hole 40 passes over sensor 37b. Although the disk type confirming hole 39 can be allocated generally to identify any of conditions including the open-closed condition, recording/reproducing possible disk, and reproducing-only disk, but in this embodiment, the opened condition of the hole means a recording/reproducing possible disk, and the closed condition meas a reproducing-only disk. Table 1 shows a list of the standards identifying the presence of tray, type of disk, and disk presence when any of the outputs of (1) - (5) is obtained.

**Table 1**

| Case | No. of H→Ls of sensor 37b until the operation of intermediate-switch 41 | Output of sensor 37b when intermediate switch 41 is in H | Disk management information | | |
|---|---|---|---|---|---|
| | | | Presence of tray | Type of disk | Presence of disk |
| (1) | 2 | L | Yes | R/W | Yes |
| (2) | 1 | L | Yes | R | Yes |
| (3) | 2 | H | Yes | R/W | No |
| (4) | 1 | H | Yes | R | No |
| (5) | 0 | H | No | - | - |
| Note. R/W: Recording/reproducing possible disk, R : Reproducing-only disk. | | | | | |

The controller 38 monitors the outputs of sensor 37b and intermediate switch 41, and memorize the number of times of the output of sensor 37b changed in a way of H → L. And, at the same time, by detecting the output level of sensor 37b when the output of intermediate switch 41 becomes to H, the presence of tray, type of disk whether it is a recording/reproducing possible disk or a reproducing-only disk, and the presence of disk can be confirmed from Table 1.

More concretely expressing, the presence of tray is confirmed except the case where the number of times of the output of sensor 37b changed in a way H → L is zero until intermediate switch 41 is operated. Moreover, a presence of recording/reproducing possible disk is confirmed when the number of times of said phenomena is more than two, and a presence of reproducing only disk is confirmed when the number of times is only one.

Moreover, when the number of times of this phenomena is zero, no presence of tray is confirmed so that the confirmations of the disk type and the presence of disk are not made further.

As for the disk presence information, a condition where the intermediate switch 41 is in a state of H and the output of sensor 37b is L, is recognized as a presence of disk, while no presence of disk is recognized when the output is H. Although not shown in Table 1, the condition where the tray or the disk is spilled out of magazine 2 can be differentiated from either of the cases shown in Table 1 since the signal of sensor 37b is L.

That is, this case can be recognized as an error where the disk/tray is spillout of tray. By repeating the above-described process for every tray, the initialization process for a sensor pair (37a, 37b) can be conducted by confirming the presence of tray, type of disk, and the disk presence, and by memorizing the result in the controller. Moreover, the abnormality of disk-spillout-of-tray becomes detectable by this at the same time. Therefore, the initialization can be performed within short time since a simple device structure can be employed and the time to transfer the disk one-by-one to the drive for placing can be eliminated.

Furthermore, the drive capable of processing both the recording/reproducing possible disk and the reproducing-only disk, or the drive capable of processing either of these disks can be employed. Even in a case employing the drive dedicated for the recording/reproducing possible disk or the drive dedicated for the reproducing-only disk, the management of disk information can be performed by employing the dedicated trays for each and by performing the same processings. Thus, the device expansion can be easily made if wished since the type of disk can be discriminated by employing proper trays.

Moreover, though the disk-type information is manageable by the type of tray in this embodiment, in a case where the drive capable of processing both of the recording/reproducing possible disk and the reproducing-only disk is employed, an extra disk type discriminating means may be provided on the drive also. By this, a higher device reliability can be obtained since the final discrimination can be performed at the drive even if an erratic disk type information is produced at the controller by a some reason or another. The disk-type discrimination means in the drive may be realized by utilizing disk-type discriminating hole 39 disposed on the tray or by using another discriminating hole disposed on the tray.

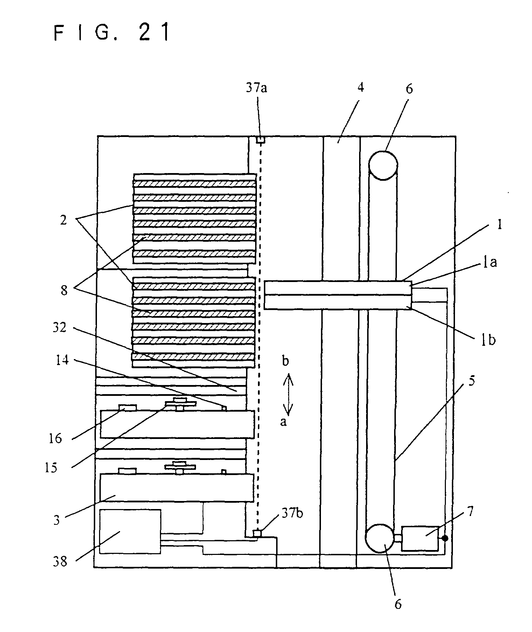

Fig. 21 shows an automatic disk changer provided with two each magazines 2 and drives 3, and tray carrier 1 capable of holding plural disks simultaneously.

The tray carrier 1 consisting of tray carriers 1a and 1b, is of a structure able to hold two disks simultaneously.

Then, the operations for exchanging the disk held in drive 3 with the disk held in magazine 2 are now explained next. This is a common and most frequently performed operations of the disk changer.

When an instruction exchanging the disk with the disk to be processed in next is issued from controller 38, tray carrier 1 is moved to the position of tray holding the disk to be processed next, and this specified tray taken out by tray carrier 1a is transferred in a direction of arrow (a), leaving tray carrier 1b at an empty condition at this time. Then, the position of tray carrier 1b relative to loading mechanism 32 is determined. At this time, the tray holding the disk being processed by drive 3 is taken out by loading mechanism 32.

After determining the position of tray carrier 1a relative to loading mechanism 32, the tray holding the disk to be processed in next is inserted into loading mechanism 32. Then, the disk clamped on turntable 15 by loading mechanism 32 is rotated and the signal is readout by pickup 16.

The returning of the disk held in tray carrier 1b is performed by the operation shown in next. Tray carrier 1b is placed first at a position relative to the predetermined position of the tray to be returned, and the tray is returned by using notch 12.

Since these operations are not sequentially performed but the disk is exchanged to the disk to be processed in next without returning the disk being processed previously into a predetermined tray position, a substantial reduction of the disk exchanging time can be realized. Moreover, since a parallel and simultaneous processings of two disks are possible by utilizing two drives 3, a high volume information can be supplied simultaneously.

The detailed explanation of the disk information management conductred in an autochanger of fig 21 is omitted here since these are performed in a way similar to that of fig. 17. However, in a case where all of the trays have to be pulled out of magazine 2 for management of disk information, either of tray carrier 1a or 1b has to be used avoiding the simultaneous use of these two, and tray 1a is consistently used in this case.

In Embodiment-9, needless to say that the initialization process is performed by detecting the presence of tray, type of disks, and the disk presence by a sensor pair (sensors 37a and 37b), and by memorizing these results in the controller. Since the abnormal positioning of tray/disk is detectable also, an autochanger of simple construction, performing the initialization processes in a short time can be offered.

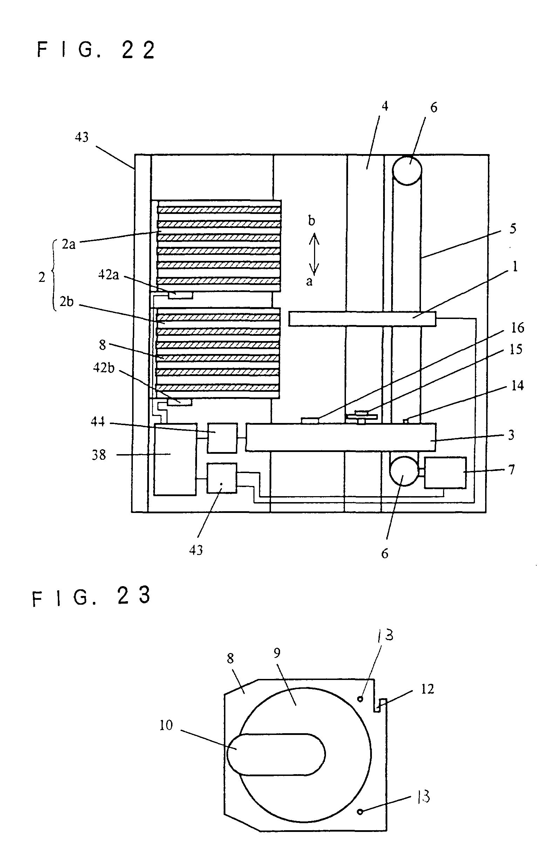

Referring to Figs. 22 and 23, tray 8 holding the disk (not shown), held in magazine 2 (2a or 2b) is taken out by tray carrier 1, and is transferred in a direction shown by arrow (a) and placed on drive 3. Tray carrier 1 is guided also by guide shaft 4 and is driven by belt 5 driven by motor 7 through pulley 6.

Plural trays 8 are hold in magazine 2 which is freely interchangeable by user by operating the door 43. In addition to this, loading sensors 42a and 42b detecting the loading or unloading of each magazine 2a and 2b are provided also.

As shown in Fig. 23, depression 9 holding the disk is provided on tray 8, and an opening 10 allowing the passages of pickup 16 and turntable 15, positioning hole 13 determining the relative position to drive 3, and notch 12 making the taking in and out of tray from/to magazine 2 easy are provided also.

Moreover, turntable 15 rotating the disk, pickup 16 readout the signal recorded on the disk, and positioning pin 14 corresponding to positioning hole 13 of tray 8 are provided also on drive 3 mounted on the autochanger.

Furthermore, a transfer controller 43 contols driving motor 7 and tray carrier 1, and a drive controller 44 controls drive 3. A controller 38 gives driving instructions for transfer controller 43 and drive controller 44, and a controller 38 controls and manages the operation of autochanger and disk information based on the input to the host computer (not shown) and operating butters (not shown).

Then, the operations of these controllers when a command to install a disk onto a predetermined drive is externally inputted into controller 38 are explained in next. Based on the output of controller 38, transfer controller 43 generates an instruction to start the operations of driving motor 7 and tray carrier 1. Tray carrier 1 is thus driven in a direction shown by either arrow (a) or (b) by driving motor 7 through belt 5, and is moved to a specified position of tray 8.

Tray carrier 1 holding tray 8 is transferred to a direction of arrow (a), and positioning hole 13 of tray 9 is engaged with the positioning pin 14 of drive 3, determining the position of tray 8 to drive 3. At this stage, controller 38 outputs an instruction to drive controller 44 in order to introduce turntable 15 and pickup 16 on drive 3 through opening 10 and to perform a centering of the disk on turntable 15 and to clamp the disk on turntable 15 by means of a clamp (not shown) provided on tray carrier 1.

After this, turntable 15 is rotated and the signal readout is performed by pickup 16. At this condition, tray 8 is positioned on drive 3 and is held within tray carrier 1 at a height avoiding the possible contact with the disk. The returning of tray 8 after ending the reproducing operation is conducted in a manner described in next.

When the rotation of turntable 15 is stopped likewise by drive controller 44 according to the instruction signal given by controller, tray carrier 1 is moved by means of driving motor 7 to a direction shown by arrow (b) by movement controller 43, and the clamp of disk to turntable 15 is released, and the disk placed on tray 8 is transferred to a predetermined position of magazine 2, and is returned into magazine 2 by utilizing notch 12.

The initialization processes of this autochanger at the time of power turn-on are began with a sending of instruction command from controller 38 to transfer controller 43, and after this, the disk presence, type of disks, and tray presence are identified by a disk information sensor (not shown) after taking out all of the trays by utilizing the tray carrier. However, the disk-type may well be identified by transferring the tray to drive 3 and placing the disk on drive 3, and the data information recorded on disk may be identified and the writing of management information may be conducted in a case of recording/reproducing media.

Then, the user operation for changing magazine 2a only is explained in next. In exchanging magazine 2a, the signal from instal sensor 42a is detected by controller 38. If the signal from instal sensor 42b is monitored and the presence of unexchanged magazine 2b is detected, an instruction commanding the before-mentioned initialization of the trays and disks held in the exchanged magazine 2a is outputted to carrier controller 43 and drive controller 44, and only the information relating to the disks held in magazine 2a are updated, and the old information held in the unchanged magazine are maintained as they are.

As above-explained, the time required to initialization can be reduced substantially by performing the initialization and by updating the data only to the exchanged magazine. Moreover, a higher operating efficiency of autochanger and a higher total efficiency of the system including the autochanger can be realized.

Although this disk changer is of a construction capable of changing the disks in an unit of magazine, it is needless to mention that the time for initialization can be reduced likewise if a sensor detecting the exchange of tray or cartridge is provided even in a case of autochanger holding and managing the disks in an unit of disk-holding tray or cartridge.

Moreover, a disk-type discrimination means may also be provided in the drive when a drive operable for both the recording/reproducing possible disk and the reproducing-only disk is employed.

## Claims

1. An automatic disk changer comprising:
an operation (3) device capable of reproducing a disk loaded thereto;
disk trays (8a) settable on said operation device (3), each of said disk trays being capable of receiving a disk selected from a plural type of disks,
a tray storage (2) holding said disk trays (8a), and
a tray carrier (1) able to pull-out/insert one of said disk trays (8A) from/into said tray storage, and able to transport said disk tray to and from said operation device (3),
**characterised in that**
said operation device is a recording/reproducing device (3) capable of operating a reproducing-only disk and a recording/reproducing possible disk,
said disk trays (8a) each have a disc type discriminating means (11) to discriminate the type of said disk whether said disk could be a reproducing-only disk or a recording/reproducing possible disk, **and** selecting means (20) selecting the recording possibility of a disk, disposed at an arbitrary position independent of said disk type discriminating means (11).

2. The automatic disk changer of Claim 1, wherein said disk type discriminating means comprises a depression or a through-hole (11) disposed at a position of said tray (8a) corresponding to a position of a detecting means (17) of said recording/reproducing device.

3. The automatic disk changer of Claim 1, wherein said selecting means (20) can be set at a condition of said disk held in said magazine (27).

4. The automatic disk changer of one of the preceding claims, wherein said disk trays are each provided with a disk presence detecting means (40).

5. The automatic disk changer of one of the preceding claims, further comprising:
a tray presence sensing means (41); and
a disk information sensing means (37b) sensing the information concerning said disk held in said tray storage (2).

6. The automatic disk changer of Claim 5, wherein said disk presence sensing means (40) and said disk-type discriminating means (39) comprises a through-hole or a notch disposed at a position which can be detected by said disk information sensing means (37a, 37b) at the time of pulling out said disk tray (8b) from said tray storage (2) by means of said tray carrier (1).

7. The automatic disk changer according to Claim 5, wherein said trough-hole or notch serving as a tray presence sensing means (41) and a disk-type discrimination means (39) can be detected by said disk information sensor; and is disposed at a position detecting the protrusion of tray or disk from said tray storage.

8. The automatic disk changer according to Claim 7, further comprising:
a middle position detecting means disposed in said tray carrier, operated when said disk tray (8b) is pulled out until a position which said tray presence detecting means (41) or said disk-type discriminating mean (39) is detected by said disk information sensing means (37a, 37b), and
a detecting and processing means (38) detecting and processing the information of disk type, disk presence, and tray presence by using output signals of said middle position detecting means and said disk information sensing means (37a, 37b).

## Patentansprüche

1. Automatischer Plattenwechsler, der umfasst:
eine Funktionsvorrichtung (3), die eine darauf aufgelegte Platte wiedergeben kann;
Platteneinschübe (8a), die auf die Funktionsvorrichtung (3) aufgesetzt werden können, wobei jeder der Platteneinschübe eine aus einer Vielzahl von Plattentypen ausgewählte Platte aufnehmen kann,
einen Einschubspeicher (2), der die Platteneinschübe (8a) aufnimmt, und
einen Einschubträger (1), der einen der Platteneinschübe (8a) aus dem Einschubspeicher herausziehen bzw. diesen in selbigen einführen kann und den Platteneinschub zu der Funktionsvorrichtung (3) und von ihr weg transportieren kann,
**dadurch gekennzeichnet, dass**:
die Funktionsvorrichtung eine Aufzeichnungs/Wiedergabevorrichtung (3) ist, die mit einer nur für die Wiedergabe bestimmten Platte und einer Platte mit Aufzeichnungs/Wiedergabemöglichkeit funktioniert,
wobei die Platteneinschübe (8a) jeweils eine Piattentyp-Erkennungseinrichtung (11) aufweisen, die den Typ Platte dahingehend erkennt, ob es sich bei der Platte um eine lediglich für die Wiedergabe bestimmte Platte oder eine Platte mit Aufzeichnungs/Wiedergabemöglichkeit handelt, sowie eine Auswähleinrichtung (20), die unabhängig von der Plattentyp-Erkennungseinrichtung (11) die Aufzeichnungsmöglichkeit einer Platte auswählt, die an einer beliebigen Position angeordnet ist.

2. Automatischer Plattenwechsler nach Anspruch 1, wobei die Plattentyp-Erkennungseinrichtung eine Vertiefung bzw. ein Durchgangsloch (11) umfasst, das an einer Position des Einschubs (8a) angeordnet ist, die einer Position einer Erfassungseinrichtung (17) der Aufzeichnungs/Wiedergabevorrichtung entspricht.

3. Automatischer Plattenwechsler nach Anspruch 1, wobei die Auswähleinrichtung (20) auf einen Zustand der Platte eingestellt werden kann, die in dem Magazin (27) aufgenommen ist.

4. Automatischer Plattenwechsler nach einem der vorangehenden Ansprüche, der mit einer Einrichtung (40) zum Erfassen des Vorhandenseins einer Platte versehen ist.

5. Automatischer Plattenwechsler nach einem der vorangehenden Ansprüche, der des Weiteren umfasst:
eine Einrichtung (41) zum Erfassen des Vorhandenseins eines Einschubs, und
einer Einrichtung (37b) zum Erfassen von Platteninformationen, die die Informationen erfasst, die die in dem Einschubspeicher (2) aufgenommene Platte betreffen.

6. Automatischer Plattenwechsler nach Anspruch 5, wobei die Einrichtung (40) zum Erfassen des Vorhandenseins einer Platte und die Plattentyp-Erkennungseinrichtung (39) ein Durchgangsloch oder eine Einkerbung umfassen, das/die an einer Position angeordnet ist, die von der Einrichtung (37a, 37b) zum Erfassen der Platteninformationen erfasst werden kann, wenn der Platteneinschub (8b) mit dem Einschubträger (1) aus dem Einschubspeicher (2) herausgezogen wird.

7. Automatischer Plattenwechsler nach Anspruch 5, wobei das Durchgangsloch bzw. die Einkerbung als eine Einrichtung (41) zum Erfassen des Vorhandenseins eines Einschubs dient, und eine Plattentyp-Unterscheidungseinrichtung (39) von dem Platteninformationssensor erfasst werden kann, und diese an einer Position angeordnet ist, an der das Vorstehen des Einschubs bzw. der Platte aus dem Einschubspeicher erfasst wird.

8. Automatischer Plattenwechsler nach Anspruch 7, der des Weiteren umfasst:
eine Mittelpositions-Erfassungseinrichtung, die in dem Einschubträger angeordnet ist und betätigt wird, wenn der Platteneinschub (8b) bis an eine Position herausgezogen wird, an der die Einrichtung (41) zum Erfassen des Vorhandenseins des Einschubs oder die Plattentyp-Erkennungseinrichtung (39) von der Einrichtung (37a, 37b) zum Erfassen der Platteninformationen erfasst wird, und
eine Erfassungs-und-Verarbeitungseinrichtung (38), die die Informationen über den Plattentyp, das Vorhandensein einer Platte und das Vorhandensein eines Einschubs unter Verwendung von Ausgangssignalen der Mittelpositions-Erfassungseinrichtung und der Einrichtung (37a, 37b) zum Erfassen der Platteninformationen erfasst und verarbeitet.

## Revendications

1. Appareil de changement automatique de disque comprenant :
un dispositif opérationnel (3) capable de reproduire un disque chargé dans celui-ci ;
des plateaux de disque (8a) pouvant être installés sur ledit dispositif opérationnel (3), chacun desdits plateaux de disque étant capable de recevoir un disque sélectionné à partir de plusieurs types de disques,
un moyen de stockage de plateaux (2) contenant lesdits plateaux de disque (8a), et
un support de plateau (1) capable de tirer/introduire l'un desdits plateaux de disque (8A) de/dans ledit moyen de stockage de plateaux, et qui est capable de transporter ledit plateau de disque vers et à partir dudit dispositif opérationnel (3),
**caractérisé en ce que**
ledit dispositif opérationnel est un dispositif d'enregistrement et de reproduction (3) capable d'agir sur un disque seulement à reproduction et sur un disque à enregistrement et à reproduction possibles,
lesdits plateaux de disque (8a) possédent chacun un moyen de distinction de type de disque (11) pour distinguer le type dudit disque pour savoir si oui ou non ledit disque pourrait être un disque seulement de reproduction ou un disque possible à enregistrement et à reproduction, et un moyen de sélection (20) qui sélectionne la possibilité d'enregistrement d'un disque, installé à une position arbitraire indépendante dudit moyen de distinction dudit type de disque (11).

2. Appareil de changement automatique de disque selon la revendication 1, dans lequel ledit moyen de distinction de type de disque comprend une gongure creusée ou un trou traversant (11) installé à une position dudit plateau (8a) qui correspond à une position d'un moyen de détection (17) dudit dispositif d'enregistrement et de reproduction.

3. Appareil de changement automatique de disque selon la revendication 1, dans lequel ledit moyen de sélection (20) peut être mis à un état dudit disque contenu dans ledit magasin (27).

4. Appareil de changement automatique de disque selon l'une quelconque des revendications précédentes, dans lequel lesdits plateaux de disque sont pourvus chacun d'un moyen de détection de présence de disque (40).

5. Appareil de changement automatique de disque selon l'une quelconque des revendications précédentes, comprenant en outre :
un moyen de détection de présence de plateau (41) ; et
un moyen de détection d'information concernant le disque (37b) qui détecte l'information concernant ledit disque contenu dans ledit moyen de stockage de plateaux (2).

6. Appareil de changement automatique de disque selon la revendication 5, dans lequel ledit moyen de détection de présence de disque (40) et ledit moyen de distinction du type de disque (39) comprennent un trou traversant ou une entaille installée à une position qui peut être détectée par ledit moyen de détection d'information concernant le disque (37a, 37b) au moment du tirage en dehors dudit plateau de disque (8b) dudit moyen de stockage de plateaux (12) au moyen dudit support de plateau (1).

7. Appareil de changement automatique de disque selon la revendication 5, dans lequel ledit trou traversant ou ladite entaille servant de moyen de détection de présence de plateau (41) et un moyen de distinction du type de disque (39) peuvent être détectés par ledit capteur d'information concernant le disque ; et il est disposé à une position de détection de la protubérance du plateau ou du disque provenant dudit moyen de stockage de plateaux.

8. Appareil de changement automatique de disque selon la revendication 7, comprenant en outre :
un moyen de détection de position milieu installé dans ledit support de plateau, mis en action lorsque ledit plateau de disque (8b) est tiré en dehors jusqu'à une position à laquelle ledit moyen de détection de présence de plateau (41) ou ledit moyen de distinction du type de disque (39) est détecté par ledit moyen de détection d'information concernant le disque (37a, 37b), et
un moyen de détection et de traitement (38) qui détecte et traite l'information concernant le type de disque, la présence du disque, et la présence du plateau en utilisant les signaux de sortie dudit moyen de détection de position milieu et dudit moyen de détection d'information de disque (37a, 37b).
